# EUROPÄISCHE PATENTSCHRIFT

(11) **EP 2 662 556 B1**
(45) Veröffentlichungstag und Bekanntmachung des Hinweises auf die Patenterteilung: **18.02.2015**
(21) Anmeldenummer: 12464007.9
(22) Anmeldetag: 09.05.2012
(51) Int. Cl.: F02M 25/07, F16K 1/22, F16K 31/04, F16K 31/53, F16H 35/02

(54) **Mischventil einer Brennkraftmaschine**
Mixing valve of a combustion engine
Mélangeur d'un moteur à combustion

(43) Veröffentlichungstag der Anmeldung: 13.11.2013
(73) Patentinhaber: Continental Automotive GmbH, 30165 Hannover (DE)
(72) Erfinder: Daniel Losif, Maxim, 300471 Timisoara (RO)

(56) Entgegenhaltungen:
- EP-A1- 1 329 618
- EP-A1- 2 317 111
- DE-A1-102005 028 374
- DE-A1-102011 053 664
- US-A- 4 838 226
- US-A- 5 562 081
- US-A1- 2005 241 702
- US-A1- 2006 283 430

## Beschreibung

Die Erfindung betrifft ein Mischventil einer Brennkraftmaschine eines Kraftfahrzeuges mit einer in einem Ansaugkanal angeordneten Klappe und einer in einem Abgaskanal angeordneten Klappe, mit in einem Gehäuse drehbar gelagerten, die Klappen haltenden Wellen, wobei der Ansaugkanal und der Abgaskanal in einen gemeinsamen Sammelkanal münden, mit einer Antriebseinrichtung zum Antrieb der Klappen, wobei die Antriebseinrichtung einen einzigen Stellmotor und ein Getriebe zur Ansteuerung der beiden Klappen aufweist.

Solche Mischventile werden bei Abgasrückführungssystemen von Brennkraftmaschinen heutiger Kraftfahrzeuge häufig eingesetzt und sind aus der Praxis bekannt. Die Bewegungen der Klappen des Ansaugkanals und des Abgaskanals sind derart gesteuert, dass die im Abgaskanal angeordnete Klappe ausgehend von der ersten Stellung linear mit einem Ansteuersignal der Antriebseinrichtung öffnet. Die im Ansaugkanal angeordnete Klappe verharrt jedoch zunächst in der ersten Stellung und wird erst oberhalb eines vorgesehenen Ansteuersignals geschlossen.

Durch einen Einsatz einer einzigen Antriebseinrichtung lassen sich die Bewegungen der Klappen koppeln. Dies führt jedoch zu einer starken Abhängigkeit der Bewegungen der Klappen. Die gleichzeitige Bewegung der Klappen steht im festen Zusammenhang eines die Bewegungen der Klappen koppelnden Getriebes.

Aus der US 2005/241702 A1 ist ein Mischventil bekannt, bei dem zwei Klappen zum Öffnen und Schließen jeweils eines Kanals fluchtend auf zwei koaxial gelagerten Wellen angeordnet sind und über ein Getriebe von einem Stellmotor angetrieben werden.

Der Erfindung liegt das Problem zugrunde, ein Mischventil der eingangs genannten Art so weiter zu bilden, dass die Öffnungs- und Schließbewegungen der Klappen besonders frei gestaltet werden können.

Dieses Problem wird erfindungsgemäß dadurch gelöst, dass ein eine der Klappen antreibendes Zahnradpaar unrunde oder exzentrische Zahnräder aufweist, eines der unrunden oder exzentrischen Zahnräder auf der Welle der Klappe des Ansaugkanals und das andere der unrunden oder exzentrischen Zahnräder auf der Welle der Klappe des Abgaskanals angeordnet ist, und das Getriebe zum Antrieb eines einzigen der unrunden oder exzentrischen Zahnräder ausgebildet ist.

Durch diese Gestaltung lassen sich unterschiedliche Winkelgeschwindigkeiten der Öffnungs- und Schließbewegungen der Klappen beim konstanten Antrieb der Antriebseinrichtung erzeugen. Ein linearer Zusammenhang der Öffnungs- und Schließbewegungen der gemeinsam angetriebenen Klappen wird dank der Erfindung vermieden. Durch eine entsprechende Festlegung der Unrundheit oder Exzentrizität der Zahnräder lassen sich die Öffnungsund Schließbewegungen der Klappen bei einem einzigen Stellmotor frei gestalten. Zudem gestaltet sich der Antrieb der Klappen mit unterschiedlichen Winkelgeschwindigkeiten konstruktiv besonders einfach.

Einen Totgang, um den die Klappe des Ansaugkanals beim Antrieb des Getriebes nicht verschwenkt wird, lässt sich gemäß einer anderen vorteilhaften Weiterbildung der Erfindung einfach erzeugen, wenn auf der Welle der Klappe des Ansaugkanals ein konzentrisches Zahnrad des Getriebes gelagert und ein abstehender Steuerarm befestigt ist, und wenn das konzentrische Zahnrad einen gegen den Steuerarm bewegbaren Mitnehmer aufweist. Durch diese Gestaltung lassen sich die Steuerung des Ansaugkanals und des Abgaskanals besonders vielseitig gestalten. Das Mischventil lässt sich gemäß einer anderen vorteilhaften Weiterbildung der Erfindung besonders kostengünstig fertigen, wenn der Mitnehmer, das konzentrische Zahnrad und das eine der unrunden oder exzentrischen Zahnräder einstückig gefertigt sind.

Die die Klappen antreibende Antriebseinrichtung könnte beispielsweise selbsthemmend gestaltet sein und die Wellen in einer Grundstellung halten. Jedoch kann ein Spiel im Getriebe oder ein Totgang zu einer Eigendynamik der Klappen führen. Die Klappen sind gemäß einer anderen vorteilhaften Weiterbildung der Erfindung zuverlässig in ihrer vorgesehenen Lage gehalten, wenn die Welle der Klappe des Ansaugkanals von einem Federelement in eine Grundstellung vorgespannt und von der Antriebseinrichtung gegen die Kraft des Federelementes auslenkbar ist.

Der bauliche Aufwand zur Halterung der Welle der Klappe des Ansaugkanals lässt sich gemäß einer anderen vorteilhaften Weiterbildung der Erfindung besonders gering halten, wenn ein Halteelement auf der Welle der Klappe des Ansaugkanals befestigt ist, und wenn das Federelement das Halteelement gegenüber dem Gehäuse abstützt.

Die Montage des Mischventils gestaltet sich gemäß einer anderen vorteilhaften Weiterbildung der Erfindung besonders einfach, wenn das Halteelement und der Steuerarm auf einander gegenüberliegenden Enden der Welle der Klappe des Ansaugkänals angeordnet sind.

Zur weiteren Verringerung der Eigendynamik der Klappen trägt es gemäß einer anderen vorteilhaften Weiterbildung der Erfindung bei, wenn die Welle der Klappe des Abgaskanals von einem Federelement in eine Grundstellung vorgespannt ist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in:
- Fig. 1: schematisch eine Brennkraftmaschine mit einem erfindungsgemäßen Mischventil,
- Fig. 2: einen Querschnitt durch das Mischventil aus Figur 1,
- Fig. 3: eine Ansicht einer Antriebseinrichtung des Mischventils,
- Fig. 4: eine rückseitige Ansicht des Mischventils,
- Fig. 5: schematisch die Schwenkbewegungen einer Klappe des Mischventils.

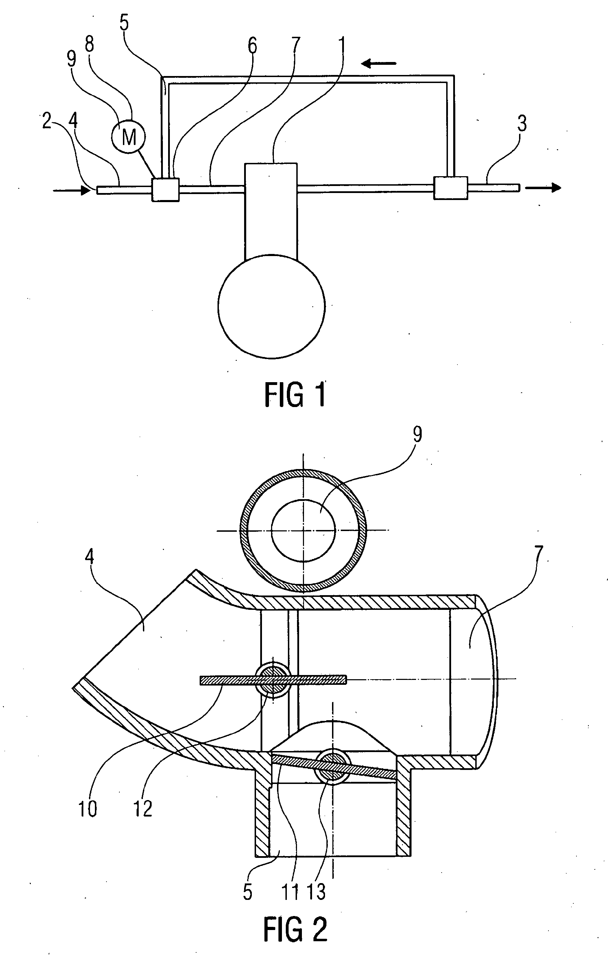

Figur 1 zeigt schematisch eine Brennkraftmaschine 1 mit einer Ansaugleitung 2 und mit einer Abgasleitung 3. Die Ansaugleitung 2 hat einen Ansaugkanal 4, über den Luft aus der Umgebung angesaugt wird. Von der Abgasleitung 3 führt ein Abgaskanal 5 über ein Mischventil 6 in die Ansaugleitung 2. Das Mischventil 6 führt den Ansaugkanal 4 und den Abgaskanal 5 zu einem Sammelkanal 7 zusammen. Der Sammelkanal 7 führt unmittelbar zu der Brennkraftmaschine 1. Eine Antriebseinrichtung 8 mit einem elektrischen Stellmotor 9 ermöglicht eine Verstellung des Mischventils 6.

Figur 2 zeigt eine Schnittdarstellung des Mischventils 6 aus Figur 1. In dem Ansaugkanal 4 und in dem Abgaskanal 5 sind jeweils eine Klappe 10, 11 auf schwenkbaren Wellen 12, 13 befestigt. Der Abgaskanal 5 ist rechtwinklig zu dem Ansaugkanal 4 und dem Sammelkanal 7 angeordnet. Der Stellmotor 9 ist auf der dem Abgaskanal 5 gegenüberliegenden Seite des Sammelkanals 7 angeordnet. In einer nicht dargestellten alternativen Ausführungsform kann der Stellmotor 9 der Antriebseinrichtung 8 auch im Eckbereich zwischen Ansaugkanal 4 und Abgaskanal 5 angeordnet sein.

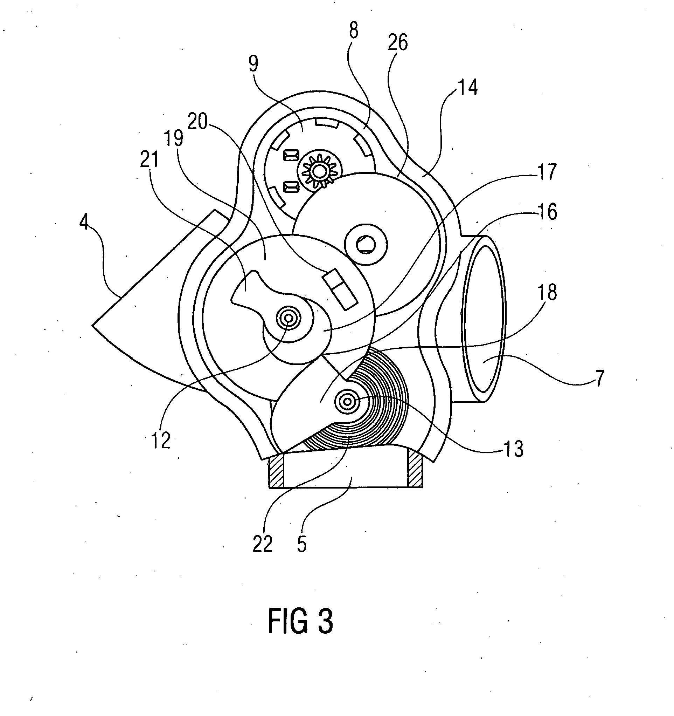

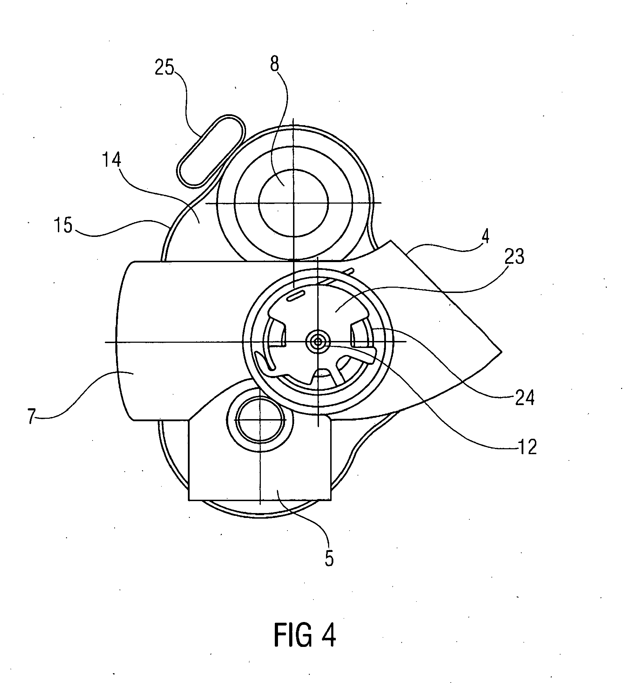

Figur 3 zeigt das Mischventil 6 in einer Draufsicht auf die Antriebseinrichtung 8. Über den Stellmotor 9 und die Antriebseinrichtung 8 werden die Wellen 12, 13 und damit auch die Klappen 10, 11 aus Figur 2 angetrieben. Das Mischventil 6 hat ein geöffnet dargestelltes Gehäuse 14, welches von einem in Figur 4 dargestellten Deckel 15 verschließbar ist. Die Antriebseinrichtung 8 hat ein Getriebe 26 zum Antrieb der Wellen 12, 13 und damit der Klappen 10, 11. Die die Klappe 11 im Abgaskanal 5 haltende Welle 13 ist über ein Zahnradpaar 16 mit unrunden oder exzentrischen Zahnrändern 17, 18 antreibbar. Das eine exzentrische oder unrunde Zahnrad 18 ist auf der Welle 13 der Klappe 11 des Abgaskanals 5 drehfest angeordnet. Das andere exzentrisch oder unrunde Zahnrad 17 ist drehfest auf einem konzentrisch auf der Welle 12 der Klappe 10 des Ansaugkanals 4 drehbar gelagerten Zahnrad 19 angeordnet. Dieses konzentrische Zahnrad 19 weist einen Mitnehmer 20 auf, welcher einem auf der Welle 12 der Klappe 10 des Ansaugkanals 4 befestigten Steuerarm 21 gegenübersteht. Weiterhin spannt ein Federelement 22 die Welle 13 der Klappe 11 des Abgaskanals 5 in eine Grundstellung vor. Hierzu stützt sich das Federelement 22 an dem Gehäuse 14 ab.

Figur 4 zeigt das Mischventil 6 aus Figur 3 in einer rückseitigen Ansicht. Hierbei ist zu erkennen, dass die Welle 12 der Klappe 10 des Ansaugkanals 4 auf ihrem dem Steuerarm 21 abgewandten Ende ein Halteelement 23 trägt. An dem Halteelement 23 greift ein zweites, sich an dem Gehäuse 14 abstützendes Federelement 24 an. Der die Antriebseinrichtung 8 aus Figur 3 abdeckende Deckel 15 des Gehäuses 14 hat einen Steckanschluss 25 zur Bestromung des Stellmotors 9.

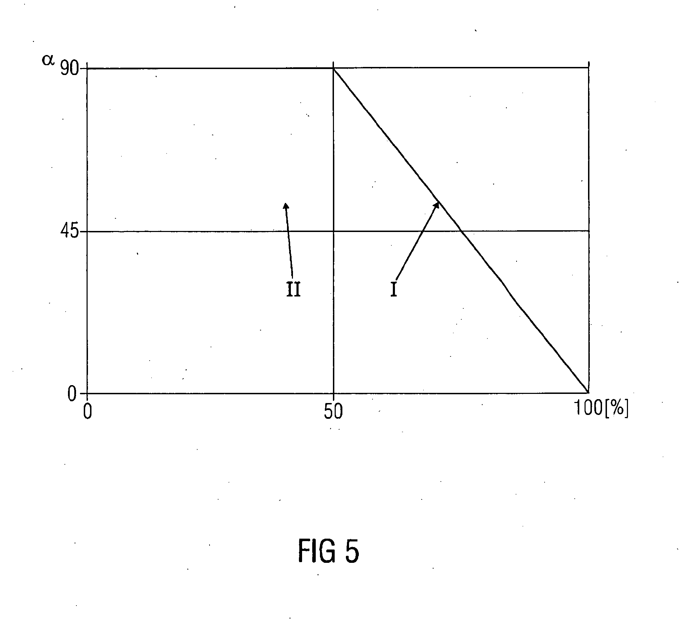

Bei einer Bestromung des Stellmotors 9 wird zunächst die in Figur 2 dargestellte Klappe 11 des Abgaskanals 5 über das Getriebe 26 und das unrunde oder exzentrische Zahnradpaar 16 angetrieben. Wegen der Form dieses Zahnradpaares 16 verläuft die Schwenkbewegung nicht linear mit dem Antrieb, sondern in einem Bogen. Figur 5 zeigt den Öffnungswinkel α der Klappe 10 über einen Bewegungsbereich der Antriebseinrichtung 8. Die Bewegung der im Ansaugkanal 4 angeordneten Klappe 10 ist mit I gekennzeichnet. Bei der Bewegung des konzentrischen Zahnrades 19 verbleibt die Klappe 10 im Ansaugkanal 4 zunächst in der geöffneten Stellung. Der Antrieb der Klappe 10 im Ansaugkanal 4 hat damit einen Totgang. Wenn das konzentrische Zahnrad 19 des Getriebes 26 soweit verdreht ist, dass der Mitnehmer 20 gegen den auf der Welle 12 der Klappe 10 des Ansaugkanals 4 angeordneten Steuerarm 21 gelangt, wird die Klappe 10 im Ansaugkanal 4 verschwenkt. Diese Schwenkbewegung verläuft linear mit dem Antrieb durch den Stellmotor 9, wie es in Figur 5 dargestellt ist. Der Ansaugkanal 4 wird damit geschlossen.

## Patentansprüche

1. Mischventil (6) einer Brennkraftmaschine (1) eines Kraftfahrzeuges mit einer in einem Ansaugkanal (4) angeordneten Klappe (10) und einer in einem Abgaskanal (5) angeordneten Klappe (11), mit in einem Gehäuse (14) drehbar gelagerten, die Klappen (10, 11) haltenden Wellen (12, 13), wobei der Ansaugkanal (4) und der Abgaskanal (5) in einen gemeinsamen Sammelkanal (7) münden, mit einer Antriebseinrichtung (8) zum Antrieb der Klappen (10, 11), wobei die Antriebseinrichtung (8) einen einzigen Stellmotor (9) und ein Getriebe (26) zur Ansteuerung der beiden Klappen (10, 11) aufweist, **dadurch gekennzeichnet, dass** ein eine der Klappen (10, 11) antreibendes Zahnradpaar (16) unrunde oder exzentrische Zahnräder (17, 18) aufweist, eines der unrunden oder exzentrischen Zahnräder (17) auf der Welle (12) der Klappe (10) des Ansaugkanals (4) und das andere der unrunden oder exzentrischen Zahnräder (18) auf der Welle (13) der Klappe (11) des Abgaskanals (5) angeordnet ist, und dass das Getriebe (26) zum Antrieb eines einzigen der unrunden oder exzentrischen Zahnräder (17) ausgebildet ist.

2. Mischventil nach Anspruch 1, **dadurch gekennzeichnet, dass** auf der Welle (12) der Klappe (10) des Ansaugkanals (4) ein konzentrisches Zahnrad (19) des Getriebes (26) gelagert und ein abstehender Steuerarm (21) befestigt ist, und dass das konzentrische Zahnrad (19) einen gegen den Steuerarm (21) bewegbaren Mitnehmer (20) aufweist.

3. Mischventil nach Anspruch 2, **dadurch gekennzeichnet, dass** der Mitnehmer (20), das konzentrische Zahnrad (19) und das eine der unrunden oder exzentrischen Zahnräder (17, 18) einstückig gefertigt sind.

4. Mischventil nach einem der Ansprüche 1 bis 3, **dadurch gekennzeichnet dass** die Welle (12) der Klappe (10) des Ansaugkanals (4) von einem Federelement (24) in eine Grundstellung vorgespannt und von der Antriebseinrichtung (8) gegen die Kraft des Federelementes (24) auslenkbar ist.

5. Mischventil nach Anspruch 4, **dadurch gekennzeichnet, dass** ein Halteelement (23) auf der Welle (12) der Klappe (10) des Ansaugkanals (4) befestigt ist, und dass das Federelement (24) das Halteelement (23) gegenüber dem Gehäuse (14) abstützt.

6. Mischventil nach Anspruch 5, **dadurch gekennzeichnet, dass** das Halteelement (23) und der Steuerarm (21) auf einander gegenüberliegenden Enden der Welle (12) der Klappe (10) des Ansaugkanals (4) angeordnet sind.

7. Mischventil nach einem der Ansprüche 1 bis 6, **dadurch gekennzeichnet, dass** die Welle (13) der Klappe (11) des Abgaskanals (5) von einem Federelement (22) in eine Grundstellung vorgespannt ist.

## Claims

1. Mixing valve (6) of an internal combustion engine (1) of a motor vehicle, having a flap (10) which is arranged in an intake duct (4) and a flap (11) which is arranged in an exhaust duct (5), having shafts (12, 13), which are rotatably mounted in a housing (14) and hold the flaps (10, 11), wherein the intake duct (4) and the exhaust duct (5) open into a common combined duct (7), and having a driving device (8) for driving the flaps (10, 11), wherein the driving device (8) has a single servomotor (9) and a mechanism (26) for operating the two flaps (10, 11), **characterized in that** a gearwheel pair (16) driving one of the flaps (10, 11) has noncircular or eccentric gearwheels (17, 18), one of the noncircular or eccentric gearwheels (17) is arranged on the shaft (12) of the flap (10) of the intake duct (4), and the other of the noncircular or eccentric gearwheels (18) is arranged on the shaft (13) of the flap (11) of the exhaust duct (5), and **in that** the mechanism (26) is designed for driving a single one of the noncircular or eccentric gearwheels (17).

2. Mixing valve according to Claim 1, **characterized in that** a concentric gearwheel (19) of the mechanism (26) is supported and a projecting control arm (21) is secured on the shaft (12) of the flap (10) of the intake duct (4), and **in that** the concentric gearwheel (19) has a driving feature (20) which can be moved against the control arm (21).

3. Mixing valve according to Claim 2, **characterized in that** the driving feature (20), the concentric gearwheel (19) and one of the noncircular or eccentric gearwheels (17, 18) are produced integrally.

4. Mixing valve according to one of Claims 1 to 3, **characterized in that** the shaft (12) of the flap (10) of the intake duct (4) is preloaded into a home position by a spring element (24) and can be deflected by the driving device (8) against the force of the spring element (24).

5. Mixing valve according to Claim 4, **characterized in that** a holding element (23) is secured on the shaft (12) of the flap (10) of the intake duct (4), and **in that** the spring element (24) supports the holding element (23) relative to the housing (14).

6. Mixing valve according to Claim 5, **characterized in that** the holding element (23) and the control arm (21) are arranged on mutually opposite ends of the shaft (12) of the flap (10) of the intake duct (4).

7. Mixing valve according to one of Claims 1 to 6, **characterized in that** the shaft (13) of the flap (11) of the exhaust duct (5) is preloaded into a home position by a spring element (22).

## Revendications

1. Soupape ( 6 ) de mélange d'un moteur ( 1 ) à combustion interne d'un véhicule automobile, comprenant un papillon ( 10 ) monté dans un conduit ( 4 ) d'aspiration et un papillon ( 11 ) monté dans un conduit ( 5 ) pour les gaz d'échappement, comprenant des arbres ( 12, 13 ) montés tournants dans un corps ( 14 ) et maintenant les papillons ( 10, 11 ), le conduit ( 4 ) d'aspiration et le conduit ( 5 ) pour les gaz d'échappement débouchant dans un conduit ( 7 ) collecteur commun, comprenant un dispositif ( 8 ) d'entraînement des papillons ( 10, 11 ), le dispositif ( 8 ) d'entraînement ayant un moteur ( 9 ) de commande unique et une transmission ( 26 ) pour la commande des deux papillons ( 10, 11 ), **caractérisée en ce qu'**une paire ( 16 ) de rouages entraînant les papillons ( 10, 11 ) a des rouages ( 17, 18 ) non circulaires ou excentriques, l'un des rouages ( 17 ) non circulaires ou excentriques étant monté sur l'arbre ( 12 ) du papillon ( 10 ) du conduit ( 4 ) d'aspiration et l'autre des rouages ( 18 ) non circulaires ou excentriques sur l'arbre ( 13 ) du papillon ( 11 ) du conduit ( 5 ) pour les gaz d'échappement et **en ce que** la transmission ( 26 ) est constituée pour l'entraînement de l'un unique des rouages ( 17 ) non circulaires ou excentriques.

2. Soupape de mélange suivant la revendication 1, **caractérisée en ce que**, sur l'arbre ( 12 ) du papillon ( 10 ) du conduit ( 4 ) d'aspiration, est monté un rouage ( 19 ) concentrique de la transmission ( 26 ) et un bras ( 21 ) de commande en saillie y est fixé et **en ce que** le rouage ( 19 ) concentrique a un toc ( 20 ) d'entraînement mobile par rapport au bras ( 21 ) de commande.

3. Soupape de mélange suivant la revendication 2, **caractérisée en ce que** le toc ( 20 ) d'entraînement, le rouage ( 19 ) concentrique et l'un des rouages ( 18 ) non circulaires ou excentriques sont fabriqués d'une seule pièce.

4. Soupape de mélange suivant l'une des revendications 1 à 3, **caractérisée en ce que** l'arbre ( 12 ) du papillon ( 10 ) du conduit ( 4 ) d'aspiration est précontraint dans une position de base par un élément ( 24 ) formant ressort et peut être dévié par le dispositif ( 8 ) d'entraînement à l'encontre de la force de l'élément ( 24 ) formant ressort.

5. Soupape de mélange suivant la revendication 4, **caractérisée en ce qu'**un élément ( 23 ) de maintien est fixé sur l'arbre ( 12 ) du papillon ( 10 ) du conduit ( 4 ) d'aspiration et **en ce que** l'élément ( 24 ) formant ressort appuie l'élément ( 23 ) de maintien sur le corps ( 14 ).

6. Soupape de mélange suivant la revendication 5, **caractérisée en ce que** l'élément ( 23 ) de maintien et le bras ( 21 ) de commande sont disposés à des extrémités opposées l'une de l'autre de l'arbre ( 12 ) du papillon ( 10 ) du conduit ( 4 ) d'aspiration.

7. Soupape de mélange suivant l'une des revendications 1 à 6, **caractérisée en ce que** l'arbre ( 13 ) du papillon ( 11 ) du conduit ( 5 ) pour les gaz d'échappement est précontraint dans une position de base par un élément ( 22 ) formant ressort.
